# EUROPEAN PATENT APPLICATION

(11) **EP 2 278 860 A2**
(43) Date of publication of application: **26.01.2011**
(21) Application number: 10159396.0
(22) Date of filing: 08.04.2010
(51) Int. Cl.: H05B 37/02

(54) **Intelligent control module and method for lighting lamp**

(30) Priority: 24.07.2009 TW 098125118
(71) Applicant: Advanpower International Limited, Tortola (VG); Hsu, Hsiu-Yu, Beitou District Taipei City (TW)
(72) Inventor: Tzeng, Jiun-Chau, Taipei City (TW)
(74) Representative: ter Meer, Nicolaus

(57) **Abstract**

An intelligent control module (30) for lighting lamp is applied to a switch unit (20), a lamp control interface (40) and a lamp (50). The intelligent control module (30) for lighting lamp includes a dimming signal output sub-module (32) and a display sub-module (34) electrically connected to the dimming signal output sub-module (32). The dimming signal output sub-module (32) includes a dimming microprocessor (330). The display sub-module (34) includes a display microprocessor (348) and a display unit (346) electrically connected to the display microprocessor (348). The dimming signal output sub-module (32) and the display sub-module (34) are electrically connected to the switch unit (20). A dimming and timing signal is sent by the dimming microprocessor (330) according to a switching-on time and duration of the switch unit (20) and provided for controlling the lamp control interface (40) to drive the lamp (50). A display signal S2 is transmitted by the display microprocessor (348) to drive the display unit (346) according to the switching-on time and duration of the switch unit (20).

## Description

### BACKGROUND OF THE INVENTION

### 1. Field of the Invention

The present invention relates to a control module and a method therefore, and more particular to an intelligent control module and a method for lighting lamp.

### 2. Description of Prior Art

In general, people would like to have lamps with a variable brightness to fit different environments such as the lower brightness for sleeping at nighttime and the higher brightness for reading or daytime activities, and thus a dimmer is introduced for adjusting the brightness of a lamp.

At present, a common dimming control device includes a dimmer installed at a power switch and provided for adjusting a power supply inputted into the power switch to control the light intensity of the lamp. However, this method has a drawback of requiring an additional dimmer, which is a mechanical knob type dimmer (or a Triac dimmer) that will be damaged easily. Alternatively, an electronic wall switch type dimmer or control panel is used, but the switch of this type of dimmer or control panel keeps consuming power after the lamp is turned off.

No matter which one of the aforementioned methods is used for controlling the light intensity of the lamp, there is at least one of the following shortcomings:
1. The operation is not precise, the function is incomplete, and the device (such as a Triac mechanical knob type dimmer) is damaged easily.
2. After the lamp is turned off, the switch of the device (such as the Triac electronic wall switch type dimmer or control panel) keeps consuming electric power.

### SUMMARY OF THE INVENTION

Therefore, it is an objective of the present invention to provide an intelligent control module to overcome the shortcomings of the prior art.

Another objective of the present invention is to provide an intelligent light control method to overcome the shortcomings of the prior art.

To achieve the first objective of the present invention, the present invention provides an intelligent control module applied to a switch unit, a lamp control interface and a lamp. The intelligent control module includes a dimming signal output sub-module. The dimming signal output sub-module includes a dimming microprocessor. The dimming signal output sub-module electrically is coupled to the switch unit. The dimming microprocessor transmits a dimming and timing signal according to a switching-on time and duration of the switch unit for controlling the lamp control interface to drive the lamp.

To achieve the second objective of the present invention, the present invention provides an intelligent light control method applied to a power source, a switch unit, a lamp control interface and a lamp. The intelligent light control method comprises the steps of providing a dimming signal output sub-module; providing a dimming microprocessor in the dimming signal output sub-module; transmitting a dimming and timing signal by the dimming microprocessor according to a switching-on time and duration of the switch unit for controlling the lamp control interface to drive the lamp.

### BRIEF DESCRIPTION OF DRAWINGS

Fig. 1 is a block diagram of an application of a dimming signal output sub-module of the present invention;
Fig. 2 is a block diagram of a dimming signal output sub-module of the present invention;
Fig. 3 is a flow chart of a dimming signal output sub-module of the present invention;
Fig. 4 is a block diagram of an application of an intelligent control module of the present invention;
Fig. 5 is a block diagram of a display sub-module of the present invention;
Fig. 6 is another flow chart of the present invention;
Fig. 7 is a block diagram of an application of an intelligent control module in accordance with another preferred embodiment of the present invention;
Fig. 8 is a block diagram of a display sub-module in accordance with another preferred embodiment of the present invention;
Fig. 9 is a circuit diagram of a dimming signal output sub-module of the present invention;
Fig. 10 is a circuit diagram of a display sub-module of the present invention;
Fig. 11 is a circuit diagram of a display sub-module in accordance with another preferred embodiment of the present invention;
Fig. 12 is a flow chart of a dimming signal output sub-module of the present invention;
Fig. 13 is another flow chart of a dimming signal output sub-module of the present invention;
Fig. 14 is a flow chart of a display sub-module of the present invention; and
Fig. 15 is another flow chart of a display sub-module of the present invention.

### DETAILED DESCRIPTION OF THE INVENTION

The technical characteristics, features and advantages of the present invention will become apparent in the following detailed description of the preferred embodiments with reference to the accompanying drawings. The drawings are provided for reference and illustration only, but not intended for limiting the present invention.

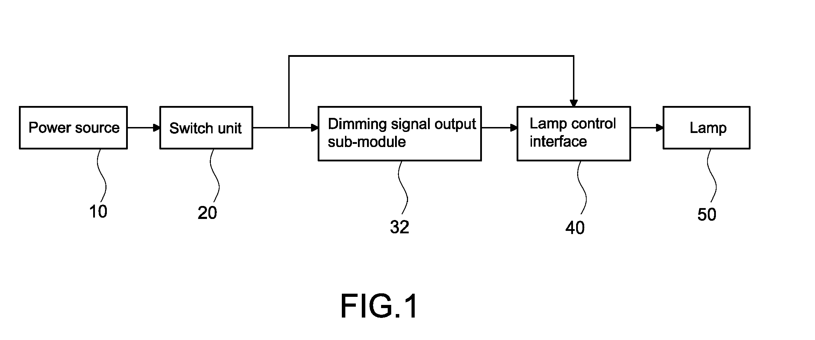

With reference to Fig. 1, for a block diagram of an application of a dimming signal output sub-module of the present invention, the dimming signal output sub-module 32 is applied to a power source 10, a switch unit 20, a lamp control interface 40 and a lamp 50. The switch unit 20 is electrically coupled to the power source 10, the lamp control interface 40 and the dimming signal output sub-module 32. The lamp control interface 40 is electrically coupled to the dimming signal output sub-module 32 and the lamp 50. The lamp control interface 40 is provided for receiving a phase control or PWM (pulse width modulation) control signal.

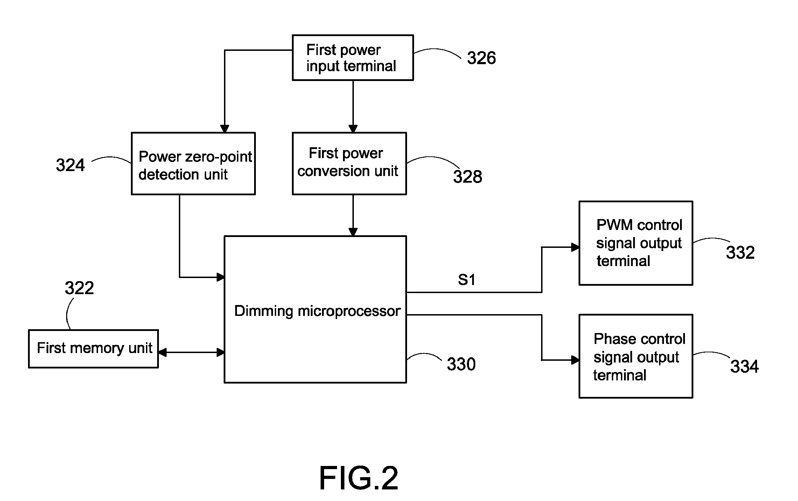

With reference to Fig. 2, for a block diagram of a dimming signal output sub-module of the present invention, the dimming signal output sub-module 32 comprises a first memory unit 322, a power zero-point detection unit 324, a first power input terminal 326, a first power conversion unit 328, a dimming microprocessor 330, a PWM control signal output terminal 332 and a phase control signal output terminal 334. The dimming microprocessor 330 is electrically coupled to the first memory unit 322 (which can be an internal memory of the dimming microprocessor 330), the power zero-point detection unit 324, the first power conversion unit 328, the PWM control signal output terminal 332 and the phase control signal output terminal 334. The first power input terminal 326 is electrically coupled to the first power conversion unit 328 and the power zero-point detection unit 324.

The dimming microprocessor 330 transmits the control signal S1 according to a switching-on time and duration of the switch unit 20 for controlling the lamp control interface 40 to drive the lamp 50. The control signal S1 can be a timing signal of a dimming signal of the lamp 50. The first memory unit 322 can save the lamp brightness or the timing set according to the switching-on time and duration of switch unit 20.

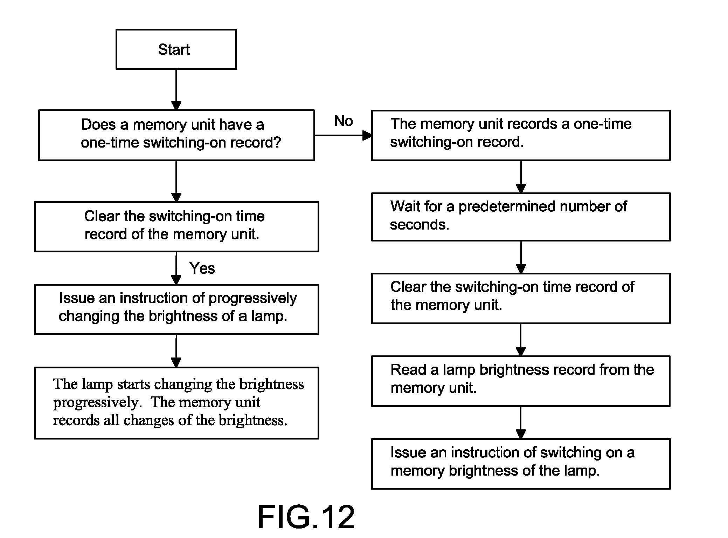

With reference to Fig. 12, for a flow chart of a dimming signal output sub-module of the present invention, the operation of the dimming signal output sub-module is described as follows.

If the first memory unit 322 does not have the one-time switching-on record of the switch unit 20, then the one-time switching-on record of the switch unit 20 will be recorded by the first memory unit 322; a predetermined number of seconds will be waited; the switching-on time record of the switch unit 20 of the first memory unit 322 will be cleared; the brightness record of the lamp 50 will be read from the first memory unit 322; and an instruction for switching on the memory brightness of the lamp 50 will be issued by the dimming microprocessor 330.

If the first memory unit 322 has the one-time switching-on record of the switch unit 20, then the switching-on time record of the switch unit 20 in the first memory unit 322 will be cleared; an instruction of progressively changing the brightness of the lamp 50 will be issued; the brightness of the lamp 50 will be changed progressively; and all changes of the brightness of the lamp 50 will be recorded by the first memory unit 322.

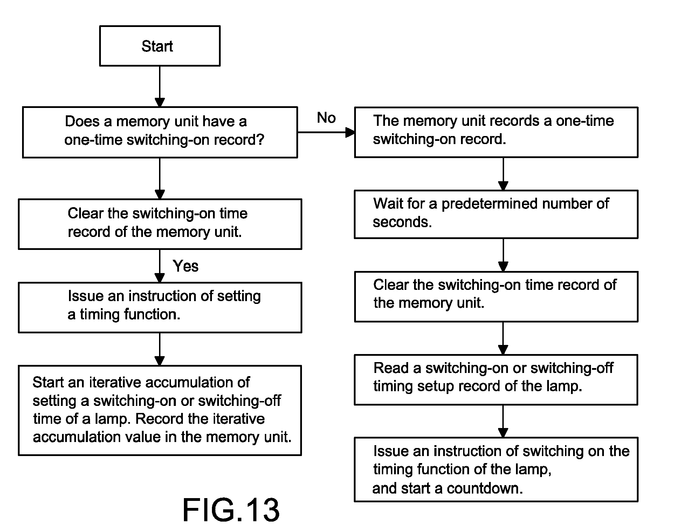

With reference to Fig. 13, for another flow chart of a dimming signal output sub-module of the present invention, the operation of the dimming signal output sub-module is described as follows.

If the first memory unit 322 does not have the one-time switching-on record of the switch unit 20, then the one-time switching-on record of the switch unit 20 will be recorded by the first memory unit 322; a predetermined number of seconds will be waited; the switching-on time record of the switch unit 20 in the first memory unit 322 will be cleared; the switching-on or switching-off time setup record of the lamp 50 in the first memory unit 322 will be read; and an instruction of switching on the timing function of the lamp 50 will be issued.

If the first memory unit 322 has the one-time switching-on record of the switch unit 20, then the switching-on time record of the switch unit 20 in the first memory unit 322 will be cleared; an instruction of setting a timing function will issued; and an iterative accumulation of setting the switching-on or switching-off time of the lamp 50 will be started, and the iterative accumulation will be recorded by the first memory unit 322.

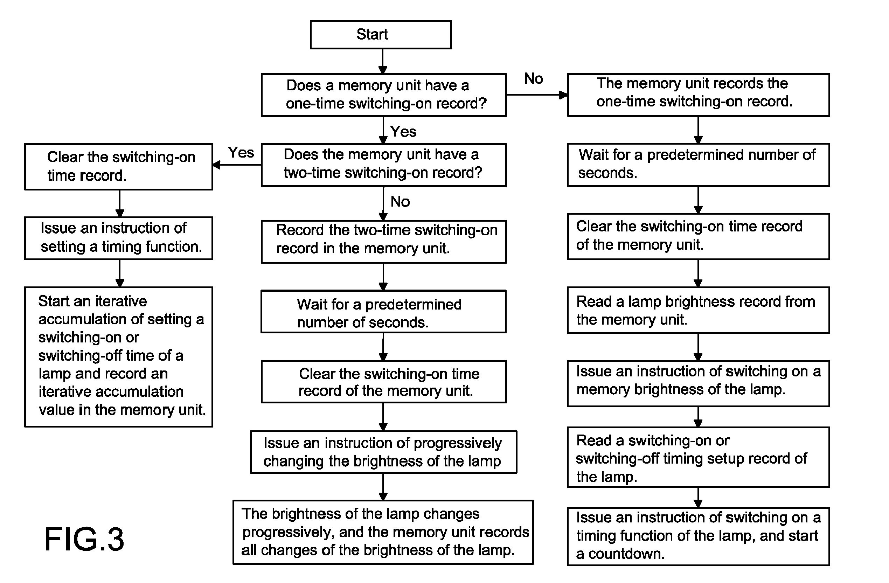

With reference to Fig. 3, for another flow chart of a dimming signal output sub-module of the present invention, the operation of the dimming signal output sub-module is described as follows.

If the first memory unit 322 does not have the one-time switching-on record of the switch unit 20, then the one-time switching-on record of the switch unit 20 will be recorded in the first memory unit 322. After a predetermined number of seconds is waited, the switching-on time record of the switch unit 20 stored in the first memory unit 322 is cleared, and then the brightness record of the lamp 50 stored in the first memory unit 322 is read. The dimming microprocessor 330 issues an instruction of switching on the memory brightness of the lamp, and then reads a lamp switching-on or switching-off time setup record from the first memory unit 322, and issues an instruction of switching on a timing function of the lamp, and finally starts a countdown.

If the first memory unit 322 has the one-time switching-on record of the switch unit 20, but does not have the two-time switching-on record, then the first memory unit 322 will record the two-time switching-on records of the switch unit 20. After a predetermined number of seconds is waited, the switching-on time record of the switch unit 20 in the first memory unit 322 is cleared, and an instruction of progressively changing a lamp brightness is issued. The brightness of the lamp 50 is changed progressively. In the meantime, the first memory unit 322 records all changes of the brightness of the lamp 50, and the switch unit 20 turns off the power supply during the period when the first memory unit 322 records all changes of the brightness of the lamp 50, and the first memory unit 322 records the final brightness of the lamp 50 as the set brightness record of the lamp 50.

If the first memory unit 322 has the two-time switching-on record of the switch unit 20, then the switching-on time record of the switch unit 20 in the first memory unit 322 will be cleared, and then an instruction of setting a timing function will be issued. Finally, an iterative accumulation of setting a switching-on or switching-off time of the lamp 50 is started and recorded in the first memory unit 322. During the period when the first memory unit 322 records all iteratively accumulated values of setting a switching-on or switching-off time of the lamp 50, the switch unit 20 turns off the power supply, and the final iteratively accumulated value of setting the switching-on or switching-off time of the lamp 50 recorded by the first memory unit 322 is the switching-on or switching-off time setup record set for the lamp 50.

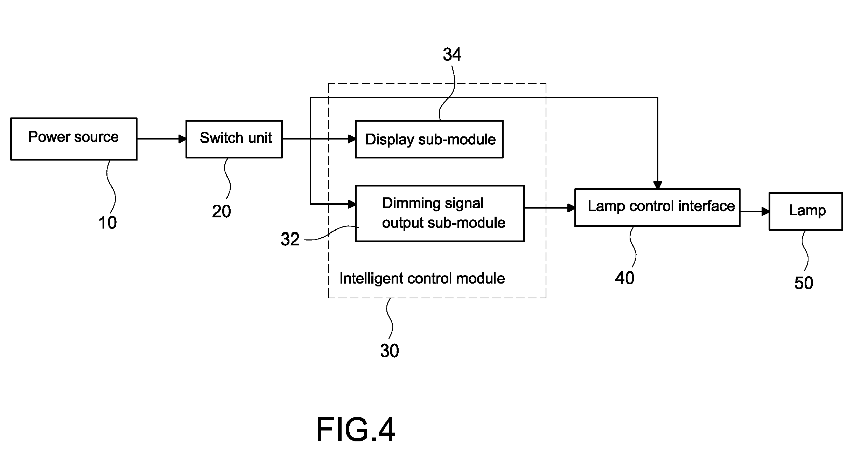

With reference to Fig. 4, for a block diagram of an application of an intelligent control module of the present invention, the intelligent control module 30 is applied to the power source 10, the switch unit 20, the lamp control interface 40 and the lamp 50. The intelligent control module 30 comprises the dimming signal output sub-module 32, and a display sub-module 34. The switch unit 20 is electrically coupled to the power source 10, the lamp control interface 40, the display sub-module 34 and the dimming signal output sub-module 32. The lamp control interface 40 is electrically coupled to the dimming signal output sub-module 32 and the lamp 50.

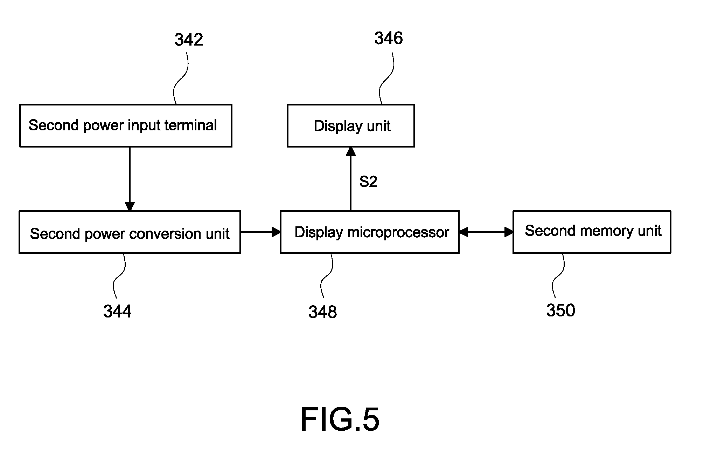

With reference to Fig. 5, for a block diagram of a display sub-module of the present invention, the display sub-module 34 comprises a second power input terminal 342, a second power conversion unit 344, a display unit 346, a display microprocessor 348 and a second memory unit 350. The second power input terminal 342 is electrically coupled to the second power conversion unit 344. The display microprocessor 348 is electrically coupled to the second power conversion unit 344, the display unit 346 and the second memory unit 350 (which is an internal memory of the display microprocessor 348).

The display microprocessor 348 transmits a display signal S2 according to the switching-on time and duration of the switch unit 20 to drive the display unit 346. The display signal S2 can be a display timing signal of the lamp 50 or a display brightness signal of the lamp 50. The second memory unit 350 can save the lamp brightness or the timing setup set by the switching-on time and duration of the switch unit 20.

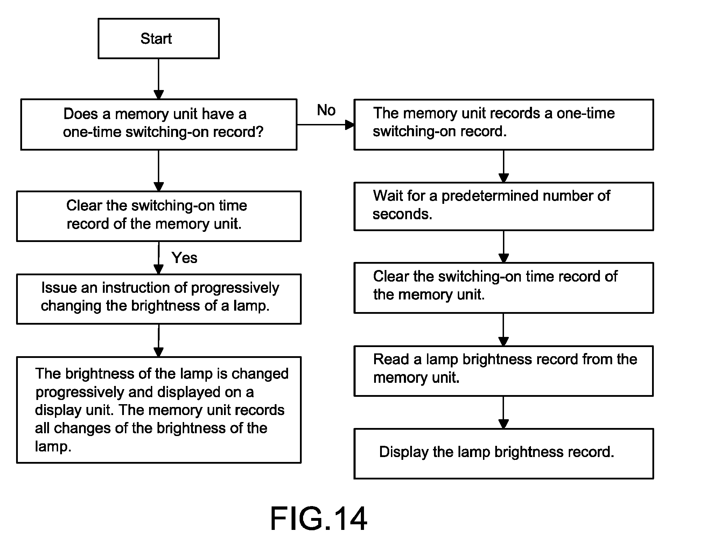

With reference to Fig. 14, for a flow chart of a display sub-module of the present invention, the operation of the display sub-module is described as follows:
If the second memory unit 350 does not have the one-time switching-on record of the switch unit 20, then the second memory unit 350 will record the one-time switching-on record of the switch unit 20, and wait for a predetermined number of seconds; and the switching-on time record of the switch unit 20 in the second memory unit 350 will be cleared; and the brightness record of the lamp 50 stored in the second memory unit 350 will be read; and the display unit 346 will display the brightness record of the lamp 50.
If the second memory unit 350 has the one-time switching-on record of the switch unit 20, then the switching-on time record of the switch unit 20 in the second memory unit 350 will be cleared; and an instruction of progressively changing the brightness of the lamp 50 will be issued; the brightness of the lamp 50 will be changed progressively; and the second memory unit 350 will record all changes of the brightness of the lamp 50, and the changes of the brightness will be displayed on the display unit 346.

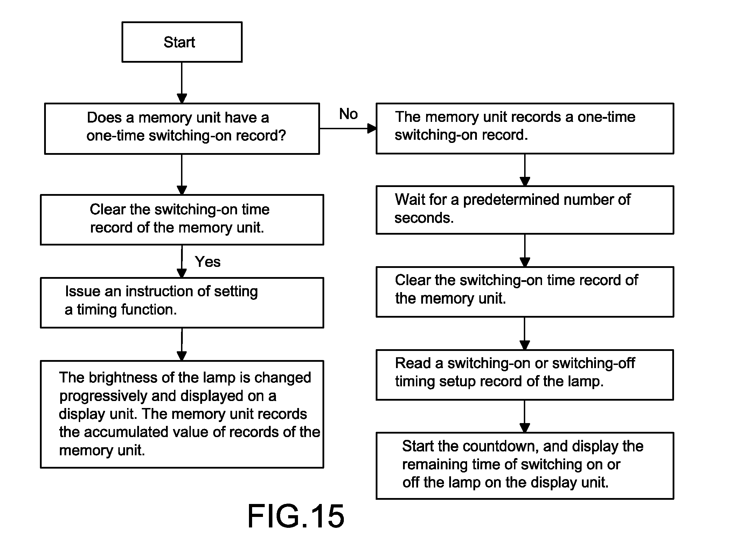

With reference to Fig. 15, for another flow chart of a display sub-module of the present invention, the operation of the display sub-module is described as follows:
If the second memory unit 350 does not have the one-time switching-on record of the switch unit 20, then the second memory unit 350 will record the one-time switching-on record of the switch unit 20; wait for a predetermined number of seconds; clear the switching-on time record of the switch unit 20 in the second memory unit 350; read a switching-on or switching-off time setup record of the lamp 50 from the second memory unit 350; and start a countdown and display a remaining time of turning on or off the lamp 50 on the display unit 346.
If the second memory unit 350 has the one-time switching-on record of the switch unit 20, then the switching-on time record of the switch unit 20 in the second memory unit 350 will be cleared; an instruction of setting a timing function will be issued; an iterative accumulation of setting a switching-on or switching-off time of the lamp 50 will be started, recorded by the second memory unit 350 and displayed on the display unit 346.

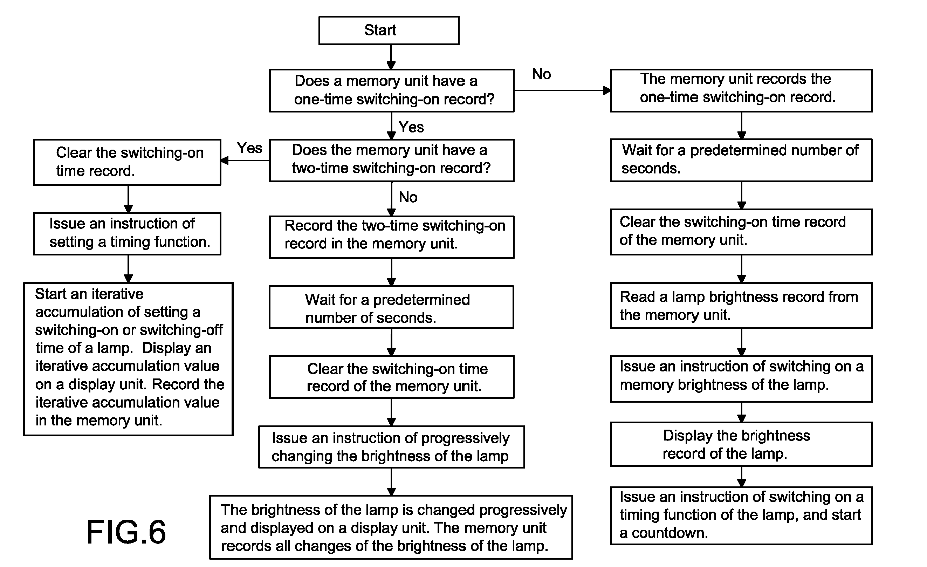

With reference to Fig. 6, for another flow chart of a display sub-module of the present invention, the operation of the display sub-module is described as follows:
If the second memory unit 350 does not have the one-time switching-on record of the switch unit 20, then the second memory unit 350 will record the one-time switching-on record of the switch unit 20. After a predetermined number of seconds is waited, the switching-on time record of the switch unit 20 stored in the second memory unit 350 is cleared. The brightness record of the lamp 50 is read from the second memory unit 350. The display unit 346 displays the brightness record of the lamp 50. The record of setting a switching-on or switching-off time of a lamp is read from the second memory unit 350. An instruction of setting a timing function of the lamp is issued. Finally, a countdown in started, and a remaining time of turning or off the lamp 50 is displayed on the display unit 346.
If the second memory unit 350 has the one-time switching-on record of the switch unit 20 but does not have the two-time switching-on record, then the second memory unit 350 will record the two-time switching-on record of the switch unit 20. After a predetermined number of seconds is waited, the switching-on time record of the switch unit 20 stored in the second memory unit 350 is cleared. An instruction of progressively changing the brightness of a lamp is issued. The brightness of the lamp 50 is changed progressively. In the meantime, all changes of the brightness of the lamp 50 are recorded by the second memory unit 350 and displayed on the display unit 346. During the period when the second memory unit 350 records all changes of the brightness of the lamp 50, the switch unit 20 turns off the power supply, and the final brightness of the lamp 50 recorded in the second memory unit 350 is the set brightness record of the lamp 50.
If the second memory unit 350 has the two-time switching-on record of the switch unit 20, then the switching-on time record of the switch unit 20 stored in the second memory unit 350 will be cleared, and an instruction of setting a timing function will be issued. Finally, an iterative accumulation of setting a switching-on or switching-off time of the lamp 50 is started, and recorded by the second memory unit 350, and displayed on the display unit 346. During the period when the second memory unit 350 records all iterative accumulation values of setting the switching-on or switching-off time of the lamp 50, the switch unit 20 turns off the power supply, and the final iterative accumulation value of setting the switching-on or switching-off time of the lamp 50 recorded by the second memory unit 350 is the switching-on or switching-off time setup record set for the lamp 50.

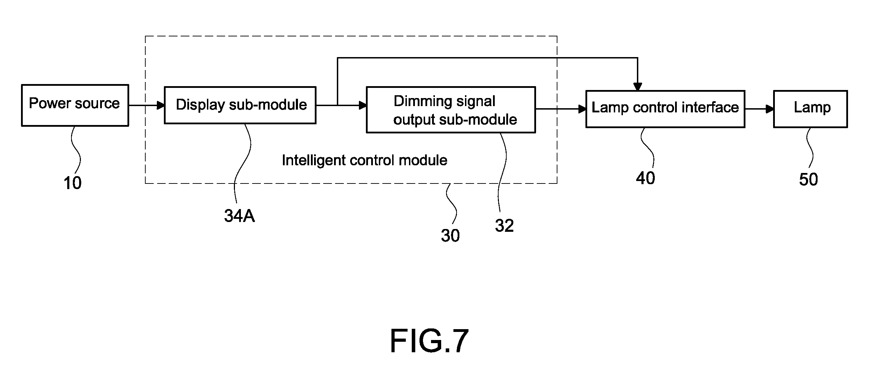

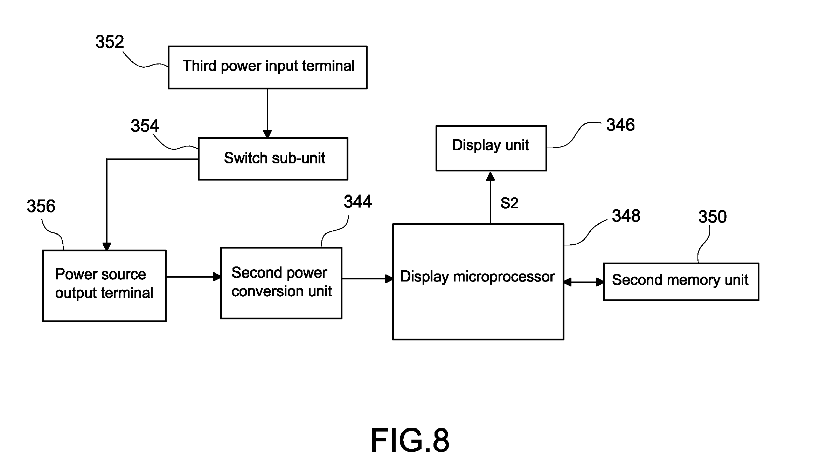

Fig. 7 shows a block diagram of an application of an intelligent control module in accordance with another preferred embodiment of the present invention. Fig. 8 shows a block diagram of a display sub-module in accordance with another preferred embodiment of the present invention. The difference between Figs. 4 and 7 resides on that the display sub-module 34 includes the switch unit 20 to constitute a display sub-module 34A for making the practical application of the product more convenient.

A display sub-module 34A is electrically coupled to the power source 10, the lamp control interface 40 and the dimming signal output sub-module 32. The lamp control interface 40 is electrically coupled to the dimming signal output sub-module 32 and the lamp 50. The display sub-module 34A comprises a third power input terminal 352, a switch sub-unit 354, a power source output terminal 356, the second power conversion unit 344, the display unit 346, the display microprocessor 348 and the second memory unit 350. The third power input terminal 352 is electrically coupled to the switch sub-unit 354. The power source output terminal 356 is electrically coupled to the switch sub-unit 354 and the second power conversion unit 344. The display microprocessor 348 is electrically coupled to the second power conversion unit 344, the display unit 346 and the second memory unit 350 (which is an internal memory of the display microprocessor 348). The rest of the operation flow is similar to the aforementioned flow chart, and thus will not be described here again.

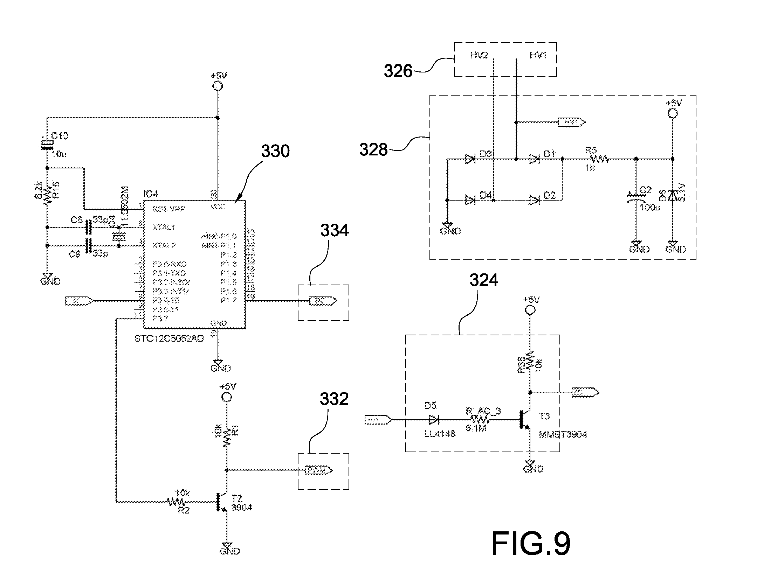

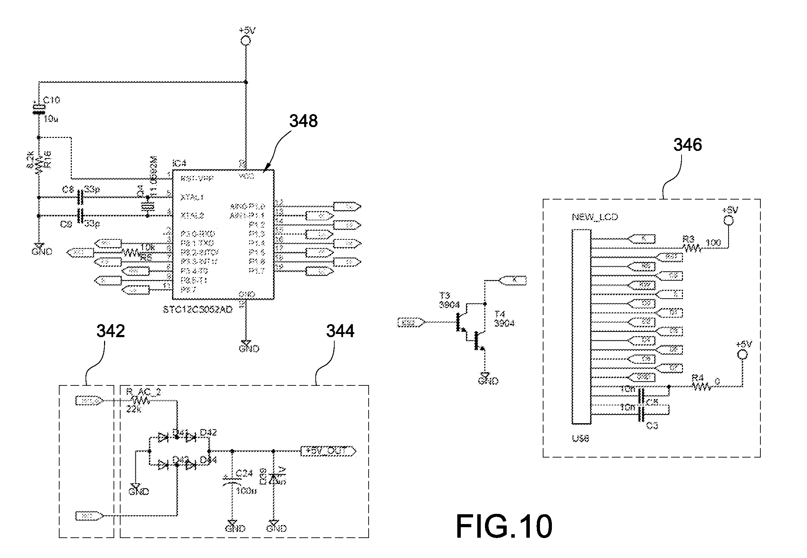

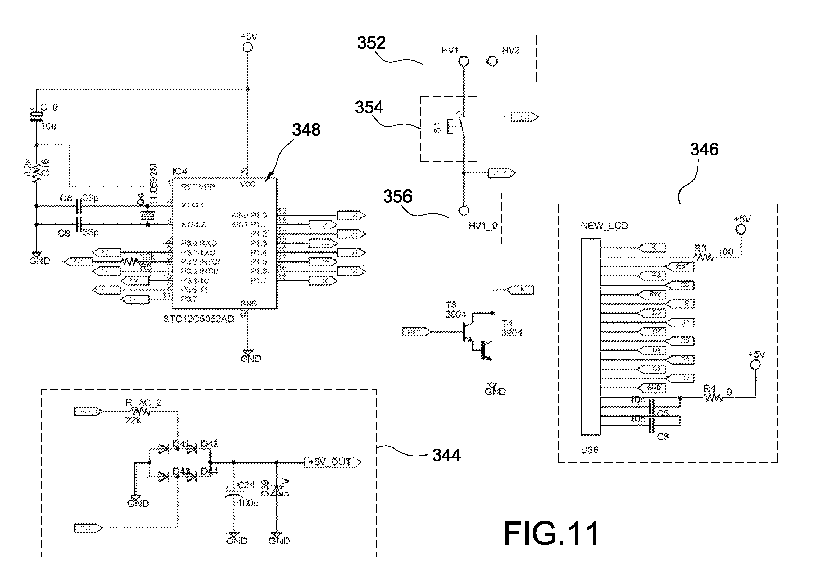

Fig. 9 shows a circuit diagram of a dimming signal output sub-module of the present invention, Fig. 10 shows a circuit diagram of a display sub-module of the present invention (corresponding to Fig. 5), and Fig. 11 shows a circuit diagram of a display sub-module of another preferred embodiment of the present invention (corresponding to Fig. 8).

The present invention has the following advantages:
1. A conventional switch unit 20 can be used together with the dimming signal output sub-module 32 to achieve the functions of electronic dimming, brightness memory, and setting the time of turning on or off a lamp.
2. The dimming signal output sub-module 32 is used together with the display sub-module 34 (or the display sub-module 34A), such that the switching-on time and duration of the switch unit 20 (or the switch sub-unit 354) can be used to achieve a synchronization between the dimming microprocessor 330 and the display microprocessor 348. Therefore, the display sub-module 34 (or the display sub-module 34A) can be used to achieve the effects of showing the brightness, the power consumption percentage, the timing of turning on or off and related data of the lamp more accurately at a lower cost.
3. No power is consumed after the lamp 50 is turned off.
4. The dimming signal output sub-module 32, the lamp control interface 40 and the lamp 50 can be integrated to improve the convenience of usage and installation.

In summation of the description above, the present invention improves over the prior art and complies with patent application requirements, and thus is duly filed for patent application.

## Claims

1. An intelligent control module (30), applied to a switch unit (20), a lamp control interface (40) and a lamp (50), and the intelligent control module (30) comprising a dimming signal output sub-module (32), and the dimming signal output sub-module 32 comprising:
a dimming microprocessor (330); and
a first memory unit (322), electrically coupled to the dimming microprocessor (330),
wherein the dimming microprocessor (330) transmits a control signal S1 according to a switching-on time and duration of the switch unit (20) for controlling the lamp control interface (40) to drive the lamp (50).

2. The intelligent control module (30) of claim 1, wherein the control signal S1 is a dimming signal of the lamp (50) or the control signal S1 is a timing signal of the lamp (50).

3. The intelligent control module (30) of claim 1, wherein the dimming signal output sub-module (32) further comprises a first power conversion unit (328), electrically coupled to the dimming microprocessor (330).

4. The intelligent control module (30) of claim 3, wherein the dimming signal output sub-module (32) further comprises a power zero-point detection unit (324) electrically coupled to the dimming microprocessor (330).

5. The intelligent control module (30) of claim 1, 3 or 4, further comprising a display sub-module (34), electrically coupled to the switch unit (20), and the display sub-module (34) comprising:
a display microprocessor (348);
a second memory unit (350,) electrically coupled to the display microprocessor (348); and
a display unit 346, electrically coupled to the display microprocessor (348),
wherein the display microprocessor (348) transmits a display signal S2 according to the switching-on time and duration of the switch unit (20) to drive the display unit (346).

6. The intelligent control module (30) of claim 5, wherein the display signal S2 is a display brightness signal of the lamp (50) or the display signal S2 is a display timing signal of the lamp (50).

7. The intelligent control module (30) of claim 5, wherein the display sub-module (34) further comprises a second power conversion unit (344) electrically coupled to the display microprocessor (348).

8. An intelligent light control method, applied to a power source (10), a switch unit (20), a lamp control interface 40 and a lamp (50), the intelligent light control method comprises:
A) providing a dimming signal output sub-module (32);
B) providing a dimming microprocessor (330) and a first memory unit (322) in the dimming signal output sub-module (32), wherein the first memory unit (322) is capable of storing a control configuration of the lamp (50) set according to a switching-on time and duration of the switch unit (20); and
C) transmitting a control signal S1 by the dimming microprocessor (330) according to the switching-on time and duration of the switch unit (20) for controlling the lamp control interface (40) to drive the lamp (50).

9. The intelligent light control method of claim 8, further comprising:
B1) setting the control configuration to be a brightness setup of the lamp (50); and
C1) setting the control signal S1 to be a dimming signal of the lamp (50).

10. The intelligent light control method of claim 8, further comprising:
B2) setting the control configuration a timing setup of the lamp (50); and
C2) setting the control signal S1 to be a timing signal of the lamp (50).

11. The intelligent light control method of claim 8, further comprising:
D) providing a display sub-module (34);
E) providing a display microprocessor (348) and a second memory unit (350) in the display sub-module (34), wherein the second memory unit (350) is capable of storing the control configuration of the lamp (50) set according to the switching-on time and duration of the switch unit (20);
F) providing a display unit (346) in the display sub-module (34); and
G) transmitting a display signal S2 of the control configuration of the lamp (50) by the display microprocessor (348) according to the switching-on time and duration of the switch unit (20) to drive the display unit (346).

12. The intelligent light control method of claim 11, further comprising:
E1) setting the control configuration to be a brightness setup of the lamp (50); and
G1) setting the display signal S2 to be a display brightness signal of the lamp (50).

13. The intelligent light control method of claim 11, further comprising:
E2) setting the control configuration to be a timing setup of the lamp (50); and
G2) setting the display signal S2 to be a display timing signal of the lamp (50).

14. The intelligent light control method of claim 9, wherein if the first memory unit (322) does not have the one-time switching-on record of the switch unit (20), then the method will carry out the steps of:|
recording the one-time switching-on record of the switch unit (20) by the first memory unit (322);
waiting for a predetermined number of seconds;
clearing the switching-on time record of the switch unit (20) of the first memory unit (322);
reading the lamp (50) brightness record of the first memory unit (322);
issuing an instruction of switching on a memory brightness of the lamp (50) by the dimming microprocessor (330); and
if the first memory unit (322) has the one-time switching-on record of the switch unit (20), then the method will carry out the steps of:
clearing the switching-on time record of the switch unit (20) of the first memory unit (322);
issuing an instruction of progressively changing the lamp (50) brightness; and
recording all changes of the lamp (50) brightness by the first memory unit (322).

15. The intelligent light control method of claim 10, wherein if the first memory unit (322) does not have the one-time switching-on record of the switch unit (20), the method will carry out the steps of:
recording the one-time switching-on record of the switch unit (20) by the first memory unit (322);
waiting for a predetermined number of seconds;
clearing the switching-on time record of the switch unit (20) of the first memory unit (322);
reading the lamp (50) switching-on or switching-off time setup record of the first memory unit (322); and
issuing an instruction of switching on a lamp (50) timing function;
and if the first memory unit (322) has the one-time switching-on record of the switch unit (20), then the method will carry out the steps of:
clearing the switching-on time record of the switch unit (20) of the first memory unit (322);
issuing an instruction for setting a timing function; and
starting an iterative accumulation of setting a switching-on or switching-off time of the lamp (50), and recording the iterative accumulation by the first memory unit (322).

16. The intelligent light control method of claim 9 or 10, wherein if the first memory unit (322) does not have the one-time switching-on record of the switch unit (20), the method will carry out the steps of:
recording the one-time switching-on record of the switch unit (20) by the first memory unit (322);
waiting for a predetermined number of seconds;
clearing the switching-on time record of the switch unit (20) of the first memory unit (322);
reading the lamp (50) brightness record of the first memory unit (322);
issuing an instruction of switching on a memory lamp (50) brightness by the dimming microprocessor (330);
reading the lamp (50) switching-on or switching-off time setup record from the first memory unit (322);
generating an instruction of switching on the timing function of the lamp (50); and
starting a countdown; and
if the first memory unit (322) has the one-time switching-on record of the switch unit (20) but does not have the two-time switching-on record, then the method will carry out the steps of;
recording the two-time switching-on record of the switch unit (20) by the first memory unit (322);
waiting for a predetermined number of seconds;
clearing the switching-on time record of the switch unit (20) of the first memory unit (322);
issuing an instruction of progressively changing the lamp (50) brightness;
changing the lamp (50) brightness progressively;
recording all changes of the lamp (50) brightness by the first memory unit (322); and
if the first memory unit (322) has the two-time switching-on record of the switch unit (20), the method will carry out the steps of:
clearing the switching-on time record of the switch unit (20) of the first memory unit (322);
issuing an instruction of setting a timing function; and
starting an iterative accumulation of setting a switching-on or switching-off time of the lamp (50), and recording the iterative accumulation by the first memory unit (322).

17. The intelligent light control method of claim 12, wherein if the second memory unit (350) does not have the one-time switching-on record of the switch unit (20), the method will carry out the steps of:
recording the one-time switching-on record of the switch unit (20) by the second memory unit (350);
waiting for a predetermined number of seconds;
clearing the switching-on time record of the switch unit (20) of the second memory unit (350);
reading the lamp (50) brightness record of the second memory unit (350);
displaying the lamp (50) brightness record by the display unit (346); and
if the second memory unit (350) has the one-time switching-on record of the switch unit (20), then the method will carry out the steps of:
clearing the switching-on time record of the switch unit (20) of the second memory unit (350);
issuing an instruction of progressively changing a lamp (50) brightness;
changing the lamp (50) brightness; and
recording all changes of the lamp (50) brightness by the second memory unit (350) and displaying the changes of the lamp (50) brightness on the display unit (346).

18. The intelligent light control method of claim 13, wherein if the second memory unit (350) does not have the one-time switching-on record of the switch unit (20), the method will carry out the steps of:
recording the one-time switching-on record of the switch unit (20) by the second memory unit (350);
waiting for a predetermined number of seconds;
clearing the switching-on time record of the switch unit (20) of the second memory unit (350);
reading a switching-on or switching-off time setup of the lamp (50) from the second memory unit (350);
starting a countdown, and displaying a remaining time for turning on or off the lamp (50) on the display unit (346); and
if the second memory unit (350) has the one-time switching-on record of the switch unit (20), then the method will carry out the steps of:
clearing the switching-on time record of the switch unit (20) recorded in the second memory unit (350);
generating an instruction of setting a timing function; and
starting an iterative accumulation of setting a switching-on or switching-off time of the lamp (50), recording the iterative accumulation by the second memory unit (350), and displaying the iterative accumulation on the display unit (346).

19. The intelligent light control method of claim 12 or 13, wherein if the second memory unit (350) does not have the one-time switching-on record of the switch unit (20), then the method will carry out the steps of:
recording the one-time switching-on record of the switch unit (20) by the second memory unit (350);
waiting for a predetermined number of seconds;
clearing the switching-on time record of the switch unit (20) of the second memory unit (350);
reading the lamp (50) brightness record of the second memory unit (350);
displaying the lamp (50) brightness record by the display unit (346);
reading the switching-on or switching-off time setup record of the lamp (50) from the second memory unit (350);
starting a countdown, and displaying a remaining time for turning on or off the lamp (50) on the display unit (346); and
if the second memory unit (350) has the one-time switching-on record of the switch unit (20), but does not have the two-time switching-on record, then the method will carry out the steps of:
recording the two-time switching-on record of the switch unit (20) by the second memory unit (350);
waiting for a predetermined number of seconds;
clearing the switching-on time record of the switch unit (20) of the second memory unit (350);
issuing an instruction of progressively changing the lamp (50) brightness;
changing the lamp (50) brightness progressively;
recording all changes of the lamp (50) brightness by the second memory unit (350) and
displaying all changes of the lamp (50) brightness on the display unit (346); and
if the second memory unit (350) has the two-time switching-on record of the switch unit (20), then the method will carry out the steps of:
clearing the switching-on time record of the switch unit (20) of the second memory unit (350);
issuing an instruction;
starting an iterative accumulation of setting a switching-on or switching-off time of the lamp (50), recording the iterative accumulation by the second memory unit (350), and displaying the iterative accumulation on the display unit (346).
